# EUROPEAN PATENT SPECIFICATION

(11) **EP 0 486 419 B1**
(45) Date of publication and mention of the grant of the patent: **28.02.1996**
(21) Application number: 91500121.8
(22) Date of filing: 30.10.1991
(51) Int. Cl.: B29C 49/06, B29C 49/02, B29C 49/04, B29C 49/08, B29C 49/28, B29C 47/20, B29C 47/26, B29C 49/48

(54) **A process for blow moulding of thermoplastic resins**
Verfahren zum Blasformen von thermoplastischen Kunstharzen
Procédé pour le montage par soufflage de résines thermoplastiques

(30) Priority: 12.11.1990 ES 9002858; 12.11.1990 ES 9002860
(43) Date of publication of application: 20.05.1992
(73) Proprietor: Plaxats Olle, Salvador, Casablanca (MA)
(72) Inventor: Plaxats Olle, Salvador, Casablanca (MA)
(74) Representative: Curell Sunol, Jorge

(56) References cited:
- FR-A- 1 550 924
- US-A- 3 329 996
- US-A- 4 305 902

## Description

### Background of the Invention

### Field of the Invention

The present invention relates to a process of blow moulding a thermoplastic resin comprising the steps of: (a) injecting a predetermined amount of the thermoplastic resin into at least one mould having a tubular cavity so as to form a tubular first preform; (b) heat conditioning the first preform to bring the first preform from the thermoplastic state to a thermoelastic state to enable molecular biorientation; (c) extruding the heat conditioned tubular first preform; and (d) blow moulding.

### Prior Art

Extrusion blow moulding techniques for hollow bodies habitually suffer from serious limitations and drawbacks. Thus, in the case of injection and blow moulding, irregularities occur in the weight and gauges, in welds, in material to be recycled and in the gauging of the bottle neck, frequent temperature adjustments in the spinneret being necessary, the result being products of poor strength and finish.

In the case of biorientated injection and blow moulding with cores and preforms, contemplated in Spanish patent nº 505.091, it is not feasible to obtain containers with handles, narrow necks or flattened bodies, nor is it possible to vary the weight, once set. In preforms of great thickness, it is difficult to homogenize the temperature thereof to heat condition the material, whereby in certain cases a prior cooling or heating is necessary. This is costly in energy, requires more time and installations of certain complexity.

The document US-A-4 305 902 discloses a method for forming plastic articles, in which the thermoplastic material is plasticized and accumulated in an amount sufficient to form the article, and the material is expressed under pressure from the accumulated body to and through an orifice; the expression of material through the orifice will subject the material to non-linear shearing forces. Nevertheless, the document US-A-4 305 902 literally states that 〈〈the blow molding machine per se form no part of the present invention〉〉.

The document US-A-3 329 996 refers to an apparatus for the formation of plastic bottles by the blown parison technique; in the apparatus, the thickness of the closed end parison may be regulated to compensate for thinning during parison blowing. But the document does not teach the formation of a tubular appendix extending from the closed end in a axial direction and coaxially respect to the parison.

### Summary of the invention

The process of the invention avoids the above drawbacks and is characterized in that said tubular first preform has a closed end and an open end, and said injecting step includes injecting the resin along a first axial direction extending from said closed end toward said open end; in that the extruding step includes pushing the closed end in a second axial direction which is opposite to said first axial direction so as to form a hollow second preform; and in that said blow moulding step, includes blow moulding the second preform outwardly against the internal surface of a blow mould to form a molecularly bioriented finished product, including delivery of pressurized gas into the interior of said second preform.

According to an embodiment of the invention, the injecting step includes forming a tubular appendix which extends from said closed end in said first axial direction and coaxially with respect to said tubular first preform.

According to a further embodiment of the invention the extruding step includes pushing said appendix and said closed end in said second axial direction to form said second preform.

According to a further embodiment of the invention, said blow mold is provided with an axially movable bottom wall, and in that the blow moulding step includes axially moving the bottom wall at a controlled speed so as to increase the internal size of the blow mould and produce a finished product having a controlled wall thickness.

### Brief Description of the Drawing

Hereinafter there are explained and described drawings expressing the development of the process of the invention and of the corresponding apparatus:
Figure 1 is a schematic view of the injection step of the resin in a mould for obtaining a heat conditioned hollow body;
Figure 2 shows the hollow body of Figure 1, a closed tube being formed in the mould by mechanical extrusion means;
Figure 3 shows the step of inserting the resin in a blow mould;
Figure 4 shows a blow mould provided with a moving bottom, in which the final shaping of the hollow body is initiated;
Figure 5 shows the final shaping of the hollow body in the blow mould, applicable to the cases of Figures 3 and 4;
Figure 6 is a schematic view, in perspective, showing the ensemble of bodies forming the apparatus in their relative positions;
Figure 7 is a plan view showing in simplified form a apparatus with four premoulding moulds, in an orthogonal arrangement;
Figure 8 is a view similar to Figure 3, showing the frame for the premoulding moulds, the final moulding moulds and the actuating cylinders.

### Detailed Description

A basic condition of the invention is the preparation of hollow bodies by way of a peculiar heat conditioning in a mould into which the resin is injected, so that the resin passes rapidly from the thermoplastic state to the thermoelastic state, which is feasible because the resin enters a large area, narrow tubular cavity.

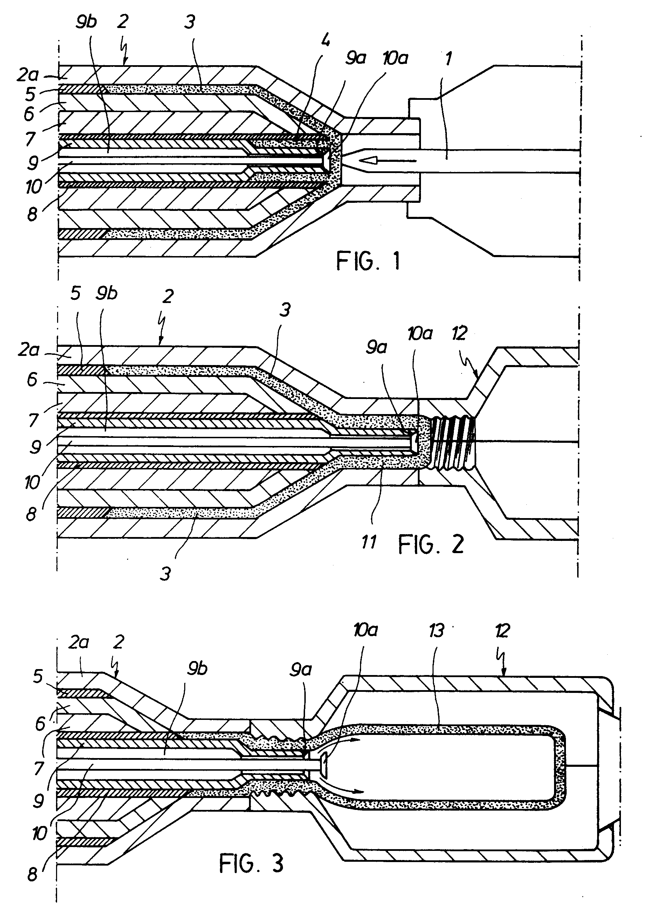

Thus, in Figure 1, the initial step is shown, in which the resin is injected by an injector 1 in the tubular cavity of the mould 2, which provides a tubular body 3 having a thin, large area wall, plus an internal appendix 4 attached to the front end thereof. In this situation, the body in question is subjected to the action of internal mechanical mutually concentric mould members consisting of an extrusion bushing 5 applied in the mould cavity, a jacket 6 forming the inner wall of this mould, a closing sleeve 7, a scavenging bushing 8, a calibrating punch 9 and a central biorientation rod 10, which move according to coordinated movements.

Thereafter, the punch 9 and the rod 10, driven by a pneumatic means, move to push the resin of the appendix 4 to form a closed tube 11, as seen in Figure 2, with preblow. From this situation, the next step is the final moulding, for which a blow mould 12 is used.

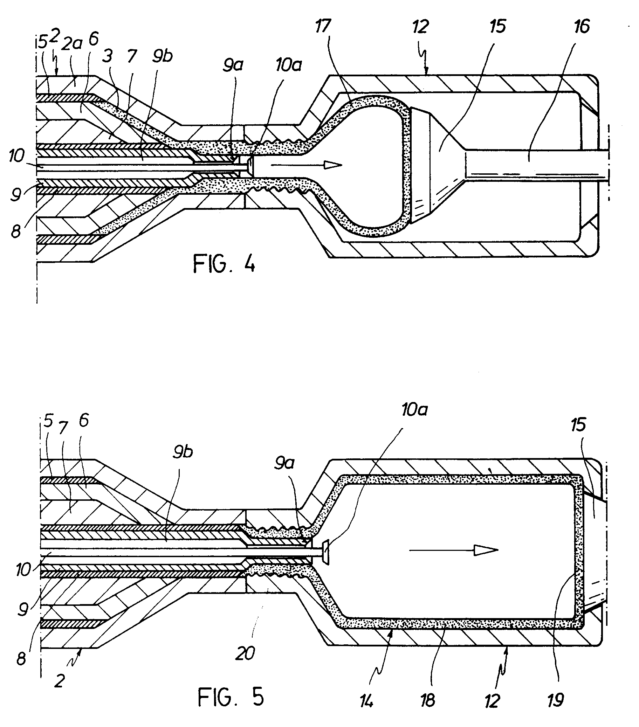

In this situation, the members of the mechanical device completely evacuate the resin from the mould 2 to the mould 12. Thus, in Figure 3, the blowing is seen to be performed from the mould 2, provided with the pertinent air device, for which purpose such mould is placed opposite the mouth of the blow mould 12. In view of the thermoelastic conditions of the resin, the moulding operation provides an elongate hollow body 13 which, in the final step, spreads out until it becomes adapted to the inner shape of the mould 12, which is to be seen in Figure 5 where the final hollow body 14 is shown. At the end of the blowing operation, the members of the mechanical device of mould 2 retract to start a new moulding operation.

This process includes the optional use of a moving bottom 15 for the blow mould 12, as shown in Figure 4, axially driven from the outside by a shaft 16. In this case, from the position of Figure 2, the resin 3 is forced to the blow mould 12, forming therein a generally spherical body 17, see Figure 4, which engages the flat front of the moving bottom 15.

The moving bottom 15 is provided, through the shaft 16, with cooling oil and air circuits which form a vacuum which, when the bottom retracts, draws the hollow body along to the end wall of the mould, from which time the body, due to the blow action it continues to receive, spreads out to adapt itself to the inner shape of the mould, as shown in Figure 5.

The resulting hollow body 14 has a tubular shape 18, a flat bottom 19 and a neck 20, the outstanding peculiarity being the achievement of uniform thickness in all the parts thereof, as was the objective according to the objects stated at the beginning of the description.

After moulding the body 14, the blow mould 12 is opened and the body is stripped with the aid of the blowing effect.

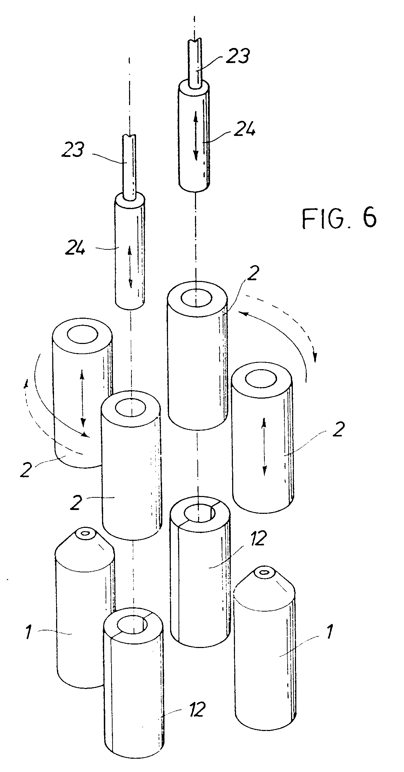

These moulding operations may be carried out simultaneously for a plurality of hollow bodies by respective moulds receiving the resin, assembled with a like number of blow moulds, as observed in Figures 6, 7 and 8.

Figure 6 gives an overall view of the component parts of the apparatus, according to an embodiment using four premoulding moulds 2, two blow moulds 12 and two injectors 1.

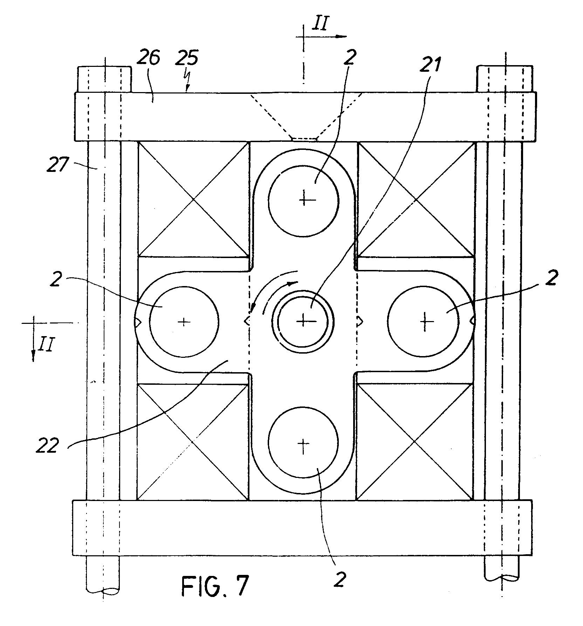

In the present embodiment, according to Figure 7, the apparatus comprises a rotary shaft 21 carrying a core 22 on which injection and extrusion premoulding moulds 2 are mounted. The said moulds 2, mounted orthogonally crosswise, axially mate with two final blow moulds 12 and two injectors 1 for the two by two alternating operations of the moulds 2 relative to the remaining said members.

The moulds 2 comprise a casing housing a drive mechanism composed of a central biorientation rod 10 and, concentrically therewith, a calibrating punch 9, a scavenging bushing 8, a closing sleeve 7 and an extrusion bushing 5, all of which is seen in Figures 1 to 5. Between the rod 10 and the punch 9 there is formed an annular conduit 9b for the compressed blowing air, which is closed by the head 10a and the seat 9a, as seen in Figures 1 and 2. The extrusion bushing 5 moves between the jacket 6 and the casing 2a of the mould 2.

There are fluid circuits in the mould 2, namely: a thermal oil circuit, a cooling liquid circuit and air circuits, not shown, for heat conditioning the material.

There are two cylinders 23 and 24 for driving the mould 2 drive mechanism.

The cylinder 23 is coupled by its shaft to the central biorientation rod 10 and to the calibrating punch 9.

The cylinder 24 drives the extrusion bushing 5.

The blow moulds 12 comprise two half moulds which are associated with the premoulding mould 2 head. The moulds 12 are provided with a moving bottom 15, attached to a shaft 16 for guided axial movement. The shaft 16 is provided with air and cooling liquid conduits.

The sets of moulds described are contained in a frame 25, to be seen in Figure 7, designed in terms of the number of moulds forming the apparatus and, in this case, houses four upper premoulding moulds 2, mating orthogonally with two lower final moulding moulds 12, concealed in the figure. The frame 25 comprises fixed cross members 26 and adjustable stringers 27.

To drive the apparatus, there are means for rotating the moulds 2 in both directions alternately, in 90°, means for moving the blow moulds 12 for coupling with the corresponding moulds 2, means for opening and closing the two blow moulds 12, means for operating the moving bottom 15 of the blow moulds 12, means for injecting resin in the corresponding moulds 2, and the said cylinders 23 for the extrusion, premoulding and final blow moulding operations.

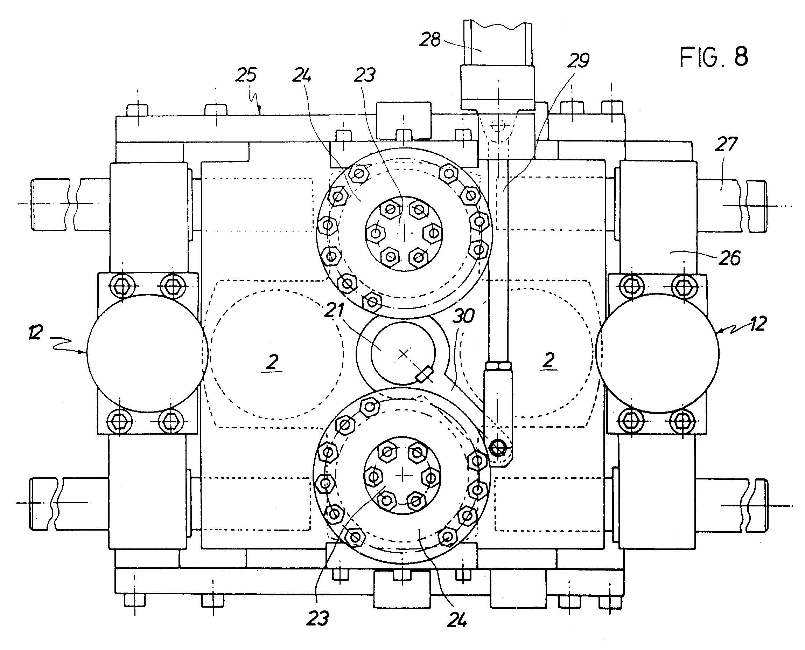

In Figure 8 there is to be seen a cylinder 28 for alternate rotation of the moulds 2 by way of a connecting rod 29 and a crank 30.

The operation of the apparatus for an operative moulding cycle is described below. Initially, the thermoplastic resin is injected by the injector 1 in the corresponding mould 2, where it is immediately subjected to the above mentioned heat conditioning allowing the passage from the thermoplastic to the thermoelastic state, whereby a hollow body is obtained as preform, as seen in Figure 1, wherein said preform has a cylindrical shape with a closed end from which there extends internally a internal appendix 4.

Thereafter the extrusion step starts, in which the cylinders 23 and 24 take part conjugating the movements of the elements coupled thereto. Figure 2 shows the forward feed of the biorientation rod 10 and of the calibration punch 9, causing the resin of the internal appendix 4 to move, forming a closed tube 11 thicker than the rest. In Figure 3 the preblowing operation starts, accompanying the penetration of the resin in the blow mould 12 forming a elongate hollow body 13, by way of the forward feed of the rod 10 and punch 9, with the separation of the head 10a from the seat 9a to make way for the preblow compressed air contained in the annular conduit 9b, as well as the forward feed of the closing sleeve 7 which contacts the bottom of the mould 2. Figure 4 shows the forward feed of the scavenging bushing 8 which evacuates the resin remains from the mould 2, at the same time as there is initiated in the blow mould 12 the formation of a generally spherical body 17 which adheres to the flat surface of the moving bottom 15 in the advanced position thereof by its polar region. Finally, according to Figure 5, the formation of the final hollow body 14 to be manufactured is terminated, comprising the tubular shape 18, the neck 20 and the bottom 19. In this step, the moving bottom 15 has gradually retreated to the base of the mould, thereby creating a suction which attracts the hollow body 14. In this stage the mould 2 returns to the starting position of the members thereof. Thereafter the blow mould 12 is opened for stripping the resulting container by blowing.

The outstanding advantages achieved by the process are to be found in a saving of time and energy in the carrying out of the different steps, as a result of the resin heat conditioning process, with the passage from the thermoplastic to the thermoelastic state, allowing the biorientated hollow bodies to pass directly from one step to another. A further essential advantage is the fact that the resulting moulded bodies are uniformly thick and, most particularly, the upper and lower edges of the bottle which require greater strength, contrarily to what happens in ordinary type blown bottles.

## Claims

1. A process of blow moulding a thermoplastic resin comprising the steps of: (a) injecting a predetermined amount of the thermoplastic resin into at least one mould (2) having a tubular cavity so as to form a tubular first preform (3); (b) heat conditioning the first preform (3) to bring the first preform (3) from the thermoplastic state to a thermoelastic state to enable molecular biorientation; (c) extruding the heat conditioned tubular first preform (3); and (d) blow moulding, characterized in that said tubular first preform (3) has a closed end and an open end, and said injecting step includes injecting the resin along a first axial direction extending from said closed end toward said open end; in that the extruding step includes pushing the closed end in a second axial direction which is opposite to said first axial direction so as to form a hollow second preform (11); and in that said blow moulding step, includes blow moulding the second preform outwardly against the internal surface of a blow mould (12) to form a molecularly bioriented finished product (14), including delivery of pressurized gas into the interior of said second preform (11).

2. The process of claim 1, characterized in that the injecting step includes forming a tubular appendix (4) which extends from said closed end in said first axial direction and coaxially with respect to said tubular first preform (3).

3. The process of claims 1 or 2, characterized in that the extruding step includes pushing said appendix (4) and said closed end in said second axial direction to form said second preform (11).

4. The process of anyone of claims 1 to 3, characterized in that said blow mould (12) is provided with an axially movable bottom wall (15), and in that the blow moulding step includes axially moving the bottom wall (15) at a controlled speed so as to increase the internal size of the blow mould (12) and produce a finished product having a controlled wall thickness.

## Patentansprüche

1. Verfahren zum Blasformen von thermoplastischem Kunststoff mit Hilfe der folgenden Verfahrensschritte:
a) Einspritzen einer bestimmten Menge eines thermoplastischen Kunststoffes in wenigstens eine Form (2), die einen rohrförmigen Hohlraum hat, um auf diese Weise eine rohrförmige, erste Vorform (3) herzustellen;
b) Wärmebehandlung der ersten Vorform (3), um diese vom thermoplastischen in einen thermoelastischen Zustand zu bringen, um auf diese Weise eine molekulare Biorientierung zu ermöglichen;
c) Extrudieren der wärmebehandelten, rohrförmigen, ersten Vorform (3); und
d) eine Blasformung,
dadurch **gekennzeichnet,**
- daß die rohrförmige, erste Vorform (3) ein geschlossenes Ende und ein offenes Ende hat, wobei der Einspritz-Verfahrensschritt das Einspritzen des Kunststoffes längs einer ersten, axialen Richtung hat, die sich vom geschlossenen zum offenen Ende erstreckt;
- daß der Extrusions-Verfahrensschritt das Beaufschlagen des geschlossenen Endes in einer zweiten, axialen Richtung umfaßt, die zur ersten, axialen Richtung entgegengesetzt ist, um auf diese Weise eine zweite, hohle Vorform (11) zu erzeugen; und
- daß der Verfahrensschritt des Blasformens die Blasverformung der zweiten Vorform nach außen gegen die Innenfläche einer Blasform (12) beinhaltet, um ein molekular biorientiertes Fertigprodukt (14) zu erzeugen, wobei Druckgas in das Innere der zweiten Vorform (11) eingeleitet wird.

2. Verfahren nach Anspruch 1,
dadurch **gekennzeichnet,** daß der Verfahrensschritt des Einspritzens das Herstellen eines rohrförmigen Ansatzes (4) umfaßt, der sich von dem geschlossenen Ende aus in die erste, axiale Richtung erstreckt und der in Bezug auf die rohrförmige, erste Vorform (3) koaxial verläuft.

3. Verfahren nach einem der Ansprüche 1 oder 2,
dadurch **gekennzeichnet,** daß der Verfahrensschritt des Extrudierens ein Beaufschlagen des Fortsatzes (4) und des geschlossenen Endes in der zweiten, axialen Richtung umfaßt, um auf diese Weise die zweite Vorform (11) herzustellen.

4. Verfahren nach einem der Ansprüche 1 bis 3,
dadurch **gekennzeichnet,**
- daß die Blasform (12) mit einer axial beweglichen Bodenwand (15) versehen ist, und
- daß der Verfahrensschritt des Blasformens das axiale Bewegen der Bodenwand (15) mit gesteuerter Geschwindigkeit umfaßt, so daß die innere Größe der Blasform (12) vergrößert wird, wobei ein Fertigprodukt erzeugt wird, das eine gesteuerte, kontrollierte Wanddicke aufweist.

## Revendications

1. Un procédé de moulage par soufflage d'une résine thermoplastique comprenant les étapes consistant à: (a) injecter une quantité prédéterminée de la résine thermoplastique dans au moins un moule (2) ayant une cavité tubulaire afin de former une première préforme tubulaire (3), (b) conditionner à la chaleur la première préforme (3) pour amener la première préforme (3) de l'état thermoplastique à un état thermoélastique pour permettre une biorientation moléculaire; (c) extruder la première préforme tubulaire (3) conditionnée à la chaleur; et (d) mouler par soufflage, caractérisé en ce que ladite première préforme tubulaire (3) présente une extrémité fermée et une extrémité ouverte, et ladite étape d'injection comprend l'injection de la résine le long d'une première direction axiale s'étendant de ladite extrémité fermée vers ladite extrémité ouverte; en ce que l'étape d'extrusion comprend la poussée de l'extrémité fermée dans une deuxième direction axiale qui est opposée à ladite première direction axiale de façon à former une deuxième préforme creuse (11); et en ce que ladite opération de moulage par soufflage comprend le moulage par soufflage de la deuxième préforme vers l'extérieur contre la surface interne d'un moule de soufflage (12) pour former un produit fini (14) biorienté moléculairement comportant la fourniture de gaz sous pression dans l'intérieur de ladite deuxième préforme (11).

2. Le procédé selon la revendication 1, caractérisé en ce que l'étape d'injection comprend la formation d'un appendice tubulaire (4) qui s'étend depuis ladite extrémité fermée dans ladite première direction axiale et coaxialement par rapport à ladite première préforme tubulaire (3).

3. Le procédé selon les revendications 1 ou 2, caractérisé en ce que l'étape d'extrusion comprend la poussée dudit appendice (4) et de ladite extrémité fermée dans ladite deuxième direction axiale pour former ladite deuxième préforme (11).

4. Le procédé selon l'une quelconque des revendications 1 à 3, caractérisé en ce que ledit moule de soufflage (12) est muni d'une paroi de fond mobile axialement (15) et en ce que l'étape de moulage par soufflage comprend le déplacement axial de la paroi de fond (15) à une vitesse réglée de façon à augmenter la dimension interne du moule de soufflage (12) et produire un produit fini ayant une épaisseur de paroi réglée.
